# EUROPEAN PATENT APPLICATION

(11) **EP 4 280 756 A1**
(43) Date of publication of application: **22.11.2023**
(21) Application number: 22739076.2
(22) Date of filing: 13.01.2022
(51) Int. Cl.: H04W 72/04

(54) **SWITCHING OF SEARCH SPACE SET GROUP OF TARGET CELL, AND CONTROL METHOD AND APPARATUS THEREFOR**

(30) Priority: 18.01.2021 CN 202110060710
(71) Applicant: Datang Mobile Communications Equipment Co., Ltd., Beijing 100085 (CN)
(72) Inventor: LUO, Chen, Beijing 100085 (CN); WANG, Jiaqing, Beijing 100085 (CN); YANG, Meiying, Beijing 100085 (CN)
(74) Representative: Cabinet Nony
(86) International application number: PCT/CN2022/071777
(87) International publication number: WO 2022/152200

(57) **Abstract**

Disclosed in the present application are switching of a search space set group of a target cell, and a control method and apparatus thereof. In the present application, a terminal is flexibly instructed by means of downlink control signaling carrying a user dedicated instruction to perform search space set group switching, so as to implement search space set group switching for service features of different users and improve the energy-saving performance of the terminal. The method comprises: receiving control signaling that is sent by a network side and carries a user dedicated instruction, the user dedicated instruction being used for instructing a terminal to switch at least one target cell from a current search space set group to a target search space set group; and switching the at least one target cell from the current search space set group to the target search space set group according to the control signaling.

## Description

### Cross Reference to Related Applications

The present application claims priority to Chinese patent application No. 202110060710.3, field on January 18, 2021 to the China National Intellectual Property Administration and entitled "SWITCHING OF SEARCH SPACE SET GROUP OF TARGET CELL, AND CONTROL METHOD AND APPARATUS THEREFOR", the entire contents of which are incorporated herein by reference.

### Technical Field

The present application relates to the technical field of communications, in particular to switching of a search space set group in a target cell and a control method and apparatus therefor.

### Background

A base station will distribute one or more search spaces for a user through system messages, each search space is periodically configured, and the user performs physical downlink control channel (PDCCH) detection in the configured search space. Each moment the user performs PDCCH detection is called a PDCCH monitoring occasion. The search space is generally periodically configured. In a 5G NR system, in order to obtain downlink scheduling information, a terminal (user equipment, UE) needs to monitor the PDCCH at each PDCCH monitoring occasion to judge whether the downlink scheduling information exists. Each PDCCH monitoring process is a PDCCH decoding process, and then it is judged to be downlink control information (DCI) carrying UE scheduling information according to a cyclic redundancy check (CRC) result. If the PDCCH has the scheduling information of the user, the UE may obtain a positive CRC, and meanwhile, the scheduling information carrying in the DCI may be obtained; and otherwise, the CRC is a negative value, and the UE cannot obtain any information in the DCI.

The PDCCH monitoring information is mainly configured by a search space set, however, a switching process of an existing search space set group is not switched aiming at search space set groups of service features of different users, resulting in poor terminal transmission performance and terminal energy saving.

### Summary

Embodiments of the present application provide switching of a search space set group of a target cell, and a control method and apparatus therefor, configured to more flexibly indicate a terminal to perform search space set group switching through downlink control signaling carrying a user dedicated instruction, so as to implement search space set group switching for service features of different users and improve the energy-saving performance of the terminal.

On a terminal side, a switching method of a search space set group of a target cell provided by the embodiments of the present application includes:
receiving control signaling sent by a network side and carrying a user dedicated instruction, and the user dedicated instruction is configured to instruct a terminal to switch a current search space set group of at least one target cell to a target search space set group; and
switching the current search space set group of the at least one target cell to the target search space set group according to the control signaling.

According to the method, the terminal may switch the current search space set group of the at least one target cell to the target search space set group through the control signaling sent by the network side and carrying the user dedicated instruction, so that the terminal performs search space set group switching more flexibly, and search space set group switching is aimed at service features of different users, which improves the terminal transmission performance.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element (MAC CE) signaling; and
radio resource control (RRC) signaling.

Optionally, the physical layer signaling includes but is not limited to:
downlink control information (DCI) format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

Optionally, the method further includes: reporting terminal capability to the network side, and the terminal capability is configured to instruct the terminal whether to support switching the current search space set group of the at least one target cell to the target search space set group through the user dedicated instruction.

Optionally, the method further includes:
switching, by the terminal, to a defaulted search space set group when meeting a preset fallback condition.

On the network side, a control method of switching a search space set group of a target cell provided by the embodiments of the present application, includes:
configuring the search space set group for a terminal; and
sending control signaling carrying a user dedicated instruction to the terminal, where the user dedicated instruction is configured to instruct the terminal to switch at least one target cell to a target search space set group.

Optionally, the method further includes: receiving terminal capability reported by the terminal, and the terminal capability is configured to instruct the terminal whether to support switching a current search space set group of the at least one target cell to the target search space set group through the user dedicated instruction; and
configuring the search space set group for the terminal, specifically including: configuring, according to the terminal capability, the search space set group for the terminal.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element (MAC CE) signaling; and
radio resource control (RRC) signaling.

Optionally, the physical layer signaling includes but is not limited to:
downlink control information DCI format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

On the terminal side, an apparatus of switching a search space set group of a target cell provided by the embodiments of the present application includes:
a memory, configured to store a program command; and
a processor, configured to call the program command stored in the memory, and execute according to an obtained program:
   receiving control signaling sent by a network side and carrying a user dedicated instruction, where the user dedicated instruction is configured to instruct a terminal to switch a current search space set group of at least one target cell to a target search space set group; and
   switching the current search space set group of the at least one target cell to the target search space set group according to the control signaling.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element (MAC CE) signaling; and
radio resource control (RRC) signaling.

Optionally, the physical layer signaling includes but is not limited to:
downlink control information (DCI) format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by the higher-layer signaling.

Optionally, the processor is further configured to: report terminal capability to the network side, and the terminal capability is configured to instruct the terminal whether to support switching the current search space set group of the at least one target cell to the target search space set group through the user dedicated instruction.

Optionally, the processor is further configured to:
switch the terminal to a defaulted search space set group when meeting a preset fallback condition.

On the network side, a control apparatus of switching a search space set group of a target cell provided by the embodiments of the present application includes:
a memory, configured to store a program command; and
a processor, configured to call the program command stored in the memory, and execute according to an obtained program:
   configuring the search space set group for a terminal; and
   sending control signaling carrying a user dedicated instruction to the terminal, wherein the user dedicated instruction is configured to instruct the terminal to switch at least one target cell to a target search space set group.

Optionally, the processor is further configured to receive terminal capability reported by the terminal, and the terminal capability is configured to instruct the terminal whether to support switching a current search space set group of the at least one target cell to the target search space set group through the user dedicated instruction; and
the configuring the search space set group for the terminal specifically includes: configuring, according to the terminal capability, the search space set group for the terminal.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element (MAC CE) signaling; and
radio resource control (RRC) signaling.

Optionally, the physical layer signaling includes but is not limited to:
downlink control information DCI format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by the higher-layer signaling.

On the terminal side, another apparatus of switching a search space set group of a target cell provided by the embodiments of the present application includes:
a receiving unit, configured to receive control signaling sent by a network side and carrying a user dedicated instruction, the user dedicated instruction being configured to instruct a terminal to switch a current search space set group of at least one target cell to a target search space set group; and
a switching unit, configured to switch the current search space set group of the at least one target cell to the target search space set group according to the control signaling.

On the network side, another control apparatus of switching a search space set group of a target cell provided by the embodiments of the present application includes:
a configuration unit, configured to configure the search space set group for a terminal; and
a sending unit, configured to send control signaling carrying a user dedicated instruction to the terminal, and the user dedicated instruction is configured to instruct the terminal to switch at least one target cell to a target search space set group.

Another embodiment of the present application provides a computing device, including a memory and a processor, wherein the memory is configured to store a program command, and the processor is configured to call the program command stored in the memory and execute any one of the above methods according to an obtained program.

Another embodiment of the present application provides a computer storage medium, wherein the computer storage medium stores a computer executable instruction, and the computer executable instruction is used to make a computer execute any one of the above methods.

### Brief Description of Figures

In order to illustrate technical solutions of embodiments of the present application more clearly, accompanying drawings needing to be used in descriptions of the embodiments will be introduced below briefly. Apparently, the accompanying drawings described below are only some embodiments of the present application, and those ordinarily skilled in the art can further obtain other accompanying drawings according to these accompanying drawings without inventive efforts.
Fig. 1 is a schematic diagram of a DRX period.
Fig. 2 is a schematic flow diagram of a switching method of a search space set group of a target cell on a terminal side provided by an embodiment of the present application.
Fig. 3 is a schematic flow diagram of a switching control method of a search space set group of a target cell on a network side provided by an embodiment of the present application.
Fig. 4 is a schematic structural diagram of a switching apparatus of a search space set group of a target cell on a terminal side provided by an embodiment of the present application.
Fig. 5 is a schematic structural diagram of a switching control apparatus of a search space set group of a target cell on a network side provided by an embodiment of the present application.
Fig. 6 is another schematic structural diagram of a switching apparatus of a search space set group of a target cell on a terminal side provided by an embodiment of the present application.
Fig. 7 is another schematic structural diagram of a switching control apparatus of a search space set group of a target cell on a network side provided by an embodiment of the present application.

### Detailed Description

The technical solutions of the embodiments of the present application will be clearly and completely described below in conjunction with accompanying drawings of the embodiments of the present application. Apparently, the described embodiments are only a part of the embodiments of the present application, not all of the embodiments. Based on the embodiments of the present application, all other embodiments obtained by those ordinarily skilled in the art without creative work shall fall within the protection scope of the present application.

The embodiments of the present application provide switching of a search space set group of a target cell, and a control method and apparatus therefor, configured to more flexibly indicate a terminal to perform search space set group switching through downlink control signaling carrying a user dedicated instruction, to implement search space set group switching for service features of different users and improve the energy-saving performance of the terminal.

The method and apparatus are based on the same application conception, principles of the method and apparatus for solving the problems are similar, implementations of the apparatus and method may refer to each other, and repetitions are omitted.

The technical solutions provided by the embodiments of the present application may be suitable for a plurality of systems, especially a 5G system. For example, the suitable systems may be a global system of mobile communication (GMS) system, a code division multiple access (CDMA) system, a wideband code division multiple access (WCDMA) general packet radio service (GPRS) system, a long term evolution (LTE) system, an LTE frequency division duplex (FDD) system, an LTE time division duplex (TDD) system, a universal mobile telecommunication system (UMTS), a worldwide interoperability for microwave access (WiMAX) system, a 5G system and a 5G new radio (NR) system, etc. These systems include terminal devices and network devices.

The terminal device involved in the embodiments of the present application may be a device for providing voice and/or data connectivity to a user, handheld devices with a wireless connection function, or other processing devices connected to a wireless modulator demodulator. In different systems, names of the terminal device may be different, and for example, in the 5G system, the terminal device may be called user equipment (UE). The wireless terminal device may be in communication with one or more core networks through a radio access network (RAN), the wireless terminal device may be a mobile terminal device, such as a mobile telephone (or called "honeycomb" telephone) and a computer with the mobile terminal device, for example, may be a portable, pocket, handheld, computer built-in or vehicle-mounted mobile apparatus, and they exchange languages and/or data with the radio access network. For example, the wireless terminal device may be a personnel communication service (PCS) telephone, a cordless telephone, a session initiated protocol (SIP) phone, a wireless local loop (WLL) station, a personnel digital assistant (PDA), etc. The wireless terminal device may also be called a system, a subscriber unit, a subscriber station, a mobile station, a mobile, a remote station, an access point, a remote terminal, an access terminal, a user terminal, a user agent and a user device, and which is not limited in the embodiments of the present application.

The network device involved in the embodiments of the present application may be a base station, and the base station may include a plurality of cells. According to a difference of specific application occasions, the base station may also be called an access point, or may refer to a device in communication with the wireless terminal device on an air interface in an access network through one or more sections, or other names. The network device may be configured to group a received air frame and an internet protocol (IP) to perform mutual conversion, and as a router between the wireless terminal device and the rest part of the access network, the rest part of the access network may include an internet protocol (IP) communication network. The network device may further coordinate attribute management of the air interface. For example, the network device involved in the embodiment of the present application may be a base transceiver station (BTS) in a global system for mobile communications (GMS) or a code division multiple access (CDMA) system, may also be a NodeB in a wide-band code division multiple access (WCDMA), may further be an evolutional node B ( eNB or e-NodeB) in a long term evolution (LTE) system, and a 5G base station in 5G network architecture (a next generation system), may also be a home evolved node B (HeNB), a relay node, a femto-cell, a pico-cell, etc., which is not limited in the embodiment of the present application.

The embodiments of the present application are described in detail in conjunction with specification accompanying drawings. It should be illustrated that an exhibition sequence of the embodiments of the present application only represents a sequential order of the embodiments, and does not represent merits and demerits of the technical solutions provided by the embodiments.

The technical solution provided by the embodiments of the present application mainly includes a trigger mode of a user dedicated instruction and a corresponding search space set group switching process, to implement the search space set group switching process aiming at a service condition of each terminal, thereby implementing a purpose of energy saving of the terminal, or improving the user transmission performance.

The search space set group switching process for the terminal at least includes one or more steps in the following steps.

Step one: a terminal side reports its terminal capability to a base station, and the terminal capability is used to instruct the terminal whether to support switching a current search space set group of at least one target cell to a target search space set group through a user dedicated instruction.

Step two: a base station side configures an energy-saving related search space set group for the terminal. Here, the search space set group may be affiliated to a primary cell or a secondary cell or one or more cells in a secondary cell group. The number of the search space set groups may be two or more than two. The search space set group may include one or more search space sets.

Step three: a base station sends a search space set group switching indication to the terminal side through downlink control signaling carrying a user dedicated instruction, and the user dedicated instruction is configured to instruct the terminal to switch a target cell or a target cell group to a target search space set group.

Here, the downlink control signaling carrying the user dedicated instruction is not limited to a kind of signaling, including one or more combinations of the following contents.

First, target cell indication information or target cell group indication information for performing search space set group switching.

Second, a search space set group switching indication, such as 1-N bits.

Third, target search space set group indication information.

Here, the downlink control signaling carrying the user dedicated instruction may be a DCI format 0_1/1_1 carrying scheduling information, may also be a DCI format 0_1/1_1 carrying non-scheduling information, may also be a DCI format 2_6, may also be a DCI format 0_2/1_2, may also be a DCI format 2_0, may also be a MAC CE, and may also be one or more combinations in RRC dedicated signaling.

Here, the target cell or the target cell group may be a serving cell, or a primary cell, or a secondary cell or one or more cells in a secondary cell group.

Here, the target cell or target cell group indication information may be indicated either explicitly or implicitly. The target cell or target cell group indication information may be an ID of a cell (group), and may also be an index indication of a target cell (group) list or a bit mapping instruction of the target cell list.

Here, the target search space set group indication information may be indicated either explicitly or implicitly. For example, explicit instruction may be an ID of the target search space set group, and may also be an index value corresponding to a list configured by the higher-layer signaling. Implicit instruction may be achieved by performing bit mapping through a search space group switching indication field, or by instructing the bit mapping of the target search space set group list through the MAC CE, or the implicit instruction may also be configured by the higher-layer signaling.

Here, the target search space set group is any one of two or more than two search space set groups configured by the higher-layer signaling.

Step four: after receiving the search space set group switching indication issued by the base station, the terminal side switches a current search space set group of a target cell or a target cell group to a target search space set group.

Here, the target cell or the target cell group may be a serving cell, or a primary cell, or a secondary cell or one or more cells in a secondary cell group. The target search space set group is any one of two or more than two search space set groups of the configured by the higher-layer signaling.

A switching process of the search space set group is described as follows.

UE capacity indicates UE whether to support at least one of two kinds of search space set group switching modes: searchSpaceSetGroupSwitchingwithoutDCI-r16 and/or searchSpaceSetGroupSwitchingwithDCI-r16. If a base station (gNB) configures a search space set group list (e.g. searchSpaceGroupIdList-r16) for UE according to the UE capacity, and the search space set group list is configured to instruct which serving cell or which serving cells to perform the switching process of the search space set group, the switching process of search space set group is performed; and otherwise, the UE cannot perform the switching process of the search space set group. If the UE is configured with the searchSpaceGroupIdList-r16 and simultaneously configured with the corresponding search space set indicated by the searchSpaceGroupIdList-r16, the UE reconfigures a search set according to the search space set 0 and monitors a corresponding PDCCH.

Search space set group only aims at Type-3 CSS and USS search space sets. When the search space sets are not configured with search space set group indexes, the terminal needs to monitor the search space sets all the time.

The search space set group switching indication has two kinds of modes: an explicit instruction or an implicit instruction which are distinguished by whether the RRC signaling is configured with SearchSpaceSwitchTrigger-r16. If yes, it is the explicit instruction; and if not, it is the implicit instruction.

As for the explicit instruction, the switch between the search space set group 0 and a search space set group 1 is triggered through the search space set group trigger instruction in the DCI format 2_0. In addition, the base station will further configure a searchSpaceSwitchingTimer-r16 through the RRC signaling, when the countdown is overtime, or after the last symbol of a remaining channel occupancy duration carrying in the search space of the DCI format 2_0 configured for the UE, the UE will fall back to monitoring of a defaulted search space set group, and the search space set group 0 is the defaulted search space set group. A timer (e.g. the searchSpaceSwitchingTimer-r16) is started when the UE is switched to the search space set group 1. The UE will have a certain delay when being switched between the search space set group 0 and the search space set group 1, capacity 1 and capacity 2 are divided according to the UE capacity, and the switching delay is configured by the gNB according to the UE capacity through the higher-layer signaling.

**Table 1. a minimum value of switching delay P_{switch} [symbol].**

| µ | UE processing capacity 1 [symbol] | UE processing capacity 2 [symbol] |
|---|---|---|
| | 25 | 10 |
| | 25 | 12 |
| | 25 | 22 |

As for the implicit instruction, the switching of the search space set group is triggered by whether the UE detects the DCI format of the corresponding search space set group. If the UE detects the DCI configured in the search space set group 0, the UE starts monitoring PDCCH based on the configuration of the search space set group 1, and stops monitoring the PDCCH in the search space set group 0, and when any DCI in the search space set group 1 is detected, the searchSpaceSwitchingTimer-r16 is switched on. When countdown of the timer is overtime, or after the last symbol of a remaining channel occupancy duration carrying in the search space of the DCI format 2_0 configured for the UE, the UE is switched from the search space set group 1 to the search space set group 0. Same as the explicit instruction, a certain delay will exist when switching is performed between the search space set group 0 and the search space set group 1, capacity 1 and capacity 2 are divided according to the UE capacity, and the switching delay is configured by gNB according to the UE capacity through the higher-layer signaling.

A discussion original intention of the search space set group under an NR-U topic is that the terminal rapidly receives the PDCCH when the base station preempts an unlicensed band in a mode of switching the search space set group, generally, the PDCCH monitoring by the user before COT is relatively frequent, the PDCCH may be rapidly monitored, that is, once the base station preempts the unlicensed band, the UE can start data transmission as soon as possible. When the terminal is at the COT, a PDCCH monitoring period is large, and the terminal may reduce blind detection at a certain degree, thereby implementing energy saving of the terminal.

The information field content of the DCI format 2_0.

When the CRC of the DCI format 2_0 is scrambled by SFI-RNTI, the specific content of the information field includes the following contents.

If the higher-layer signaling configures a parameter search space switch trigger list (i.e. searchSpaceSwitchTriggerToAddModList-r16), the related search space set group switching information field in the DCI format 2_0 includes the following:
a search space set group switching indication 1, a search space set group switching indication 2, ......, and a search space set group switching indication M.

Each indication is configured to indicate search space set group switching of one secondary cell or a secondary cell group configured by the terminal.

Examples of several specific embodiments are given below.

Embodiment I : an example of a switching process of a specific search space set group.

Step one: a terminal side reports user capacity to a base station: whether support search space set group switching for energy saving of the terminal.

The user capacity may be energy-saving dedicated search space set group switching capacity, and may also be version upgrade or extension of existing search space set group switching capacity.

Step two: a base station side configures an energy-saving related search space set group for the terminal. Here, search space set grouping may be affiliated to a serving cell or a primary cell or a secondary cell or one or more cells in a secondary cell group. The search space set group may be two or more than two.

The following content is only used as an example.

As for the base station side, two search space set groups are configured, one search space set group serves as a defaulted search space set group, the other search space set group serves as a candidate search space set group, for example, the defaulted search space set group may serve as a regular search space set configuration for monitoring PDCCH by a terminal, and the other search space set group serves as the search space set group with an energy-saving purpose. The search space set groups may be only associated with a primary cell, that is, only search space sets of the primary cell are grouped, and indexes of the corresponding search space set groups are 0 or 1; and similarly, the search space set groups may also be associated with a certain cell or certain cells, may also be associated with a certain cell group or certain cell groups, that is, search space sets under the certain cell or certain cells (cell groups) are grouped, index values of the grouping are 0 or 1. The cells here include a primary cell and/or a secondary cell, the search space sets under the cell may be completely grouped, and may also be partly grouped.

As for the base station side, a plurality of search space set groups are configured, one of the plurality of search space set group is a defaulted search space set group, which may be preconfigured through higher-layer signaling, or may also be fixed as a certain index value, such as an index 0; and the remaining search space set groups serve as candidate search space set groups, and are configured with corresponding grouping index values, for example, the defaulted search space set group may serve as a search space set configuration for monitoring a conventional PDCCH by a terminal, other search space set groups serve as search space set group candidates with an energy-saving purpose, and switching to which target search space set group is specifically indicated through downlink control signaling.

When the terminal initially receives the configuration of the search space set group from the base station side, PDCCH monitoring may be performed according to the defaulted search space set group, and PDCCH monitoring may also be performed maintaining at an existing search space set group.

Step three: the base station sends the search space set group switching indication to the terminal side through the downlink control signaling carrying the user dedicated instruction, and the search space set group switching indication is configured to instruct the terminal to switch a target cell or a target cell group to a target search space set group.

Here, the target cell or the target cell group may be a serving cell, or a primary cell, or a secondary cell or one or more cells in a secondary cell group.

Here, the downlink control signaling carrying the user dedicated instruction is not limited to a kind of signaling, and includes one or more combinations of a plurality of contents.

First, target cell indication information or target cell group indication information for performing search space set group switching.

If the search space set group switching only aims at a certain fixed cell, such as the primary cell or a current serving cell or a cell group where the primary cell or the current serving cell is located, the information may be omitted.

Here, the target cell or target cell group indication information may be indicated either explicitly or implicitly. The target cell or target cell group indication information may be an ID of the cell (group), and may also be an index indication of a target cell (group) list or a bit mapping instruction of the list. The target cell or target cell group indication information may be configured by higher-layer signaling, may also be carried through the DCI format, may also be instructed through the MAC CE, and may also be a combination instruction of the higher-layer signaling and the DCI format/MAC CE.

Second: search space set group switching indication, 1-N bits.

The search space set group switching indication may be instructed through the DCI format and/or MAC CE and/or RRC dedicated signaling, and a specific instruction method is detailed in EmbodimentII.

The DCI carrying the search space set group switching indication may be a DCI format 0_1/1_1 (may refer to Embodiment II) carrying scheduling information, may also be a DCI format 0_1/1_1 (may refer to Embodiment III) carrying non-scheduling information, may also be a DCI format 2_6 (may refer to Embodiment IV), and may also be a DCI format 0_2/1_2, which is not limited to the plurality of listed kinds.

Three: target search space set group indication information.

Here, the target search space set group information may be instructed either explicitly or implicitly. For example, explicit instruction may be an ID of the target search space set group, and may also be an index value corresponding to a list configured by the higher-layer signaling. Implicit instruction may be achieved by performing bit mapping through a search space group switching indication field, or by instructing the bit mapping of the target search space set group list through the MAC CE, or the implicit instruction may also be configured by the higher-layer signaling.

Here, the target search space set group is any one of two or more than two search space set groups configured by the higher-layer signaling. Here, the target search space set group may be the same or different from the search space set group where the terminal is located at present.

Step four: after receiving the downlink control signaling sent by the base station and carrying the user dedicated instruction, the terminal side switches the instructed target cell or target cell group to the target search space set group for corresponding PDCCH monitoring according to the carried search space set group switching information.

Optionally, as for the base station side, in order to ensure that the terminal may fall back to a conventional PDCCH monitoring mode from the energy-saving mode, and avoid affecting normal data receiving of the terminal due to the fact that the downlink control signaling carrying a switching indication is not received in time, the search space set group switching process may adopt a fallback mechanism, and may be one or more combinations of the following methods.

Method one: a fallback timer is configured. When the fallback timer is overtime, the terminal falls back to the defaulted search space set group.

Method two: if the terminal configures a DRX mechanism, at the next DRX period, such as an initial position of a long DRX period and/or a short DRX period, the terminal falls back to the defaulted search space set group. If an energy-saving signal instructs that an on duration timer is not switched on at the next DRX period, the terminal may fall back to the defaulted search space set group at the next DRX period, and may fall back to the defaulted search space set group at a DRX period that is subsequently awakened.

As for DRX transmission, the introduction is as follows.

When the UE configures the DRX, the UE will discontinuously monitor the PDCCH. The UE only monitors the PDCCH during the DRX activity period, for example, when the on duration timer or an inactivity timer is not overtime.

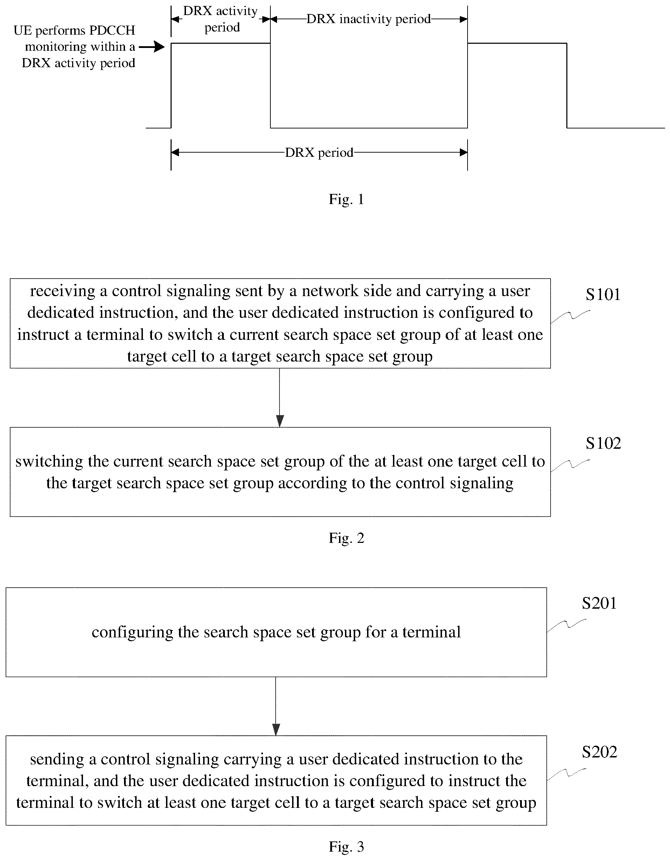

A discontinuous reception (DRX) mechanism is shown in Fig. 1. In the DRX period, the UE only monitors the PDCCH within the activity period, and at the DRX inactivity period, namely within DRX off time, the UE does not receive other PDCCHs other than scheduling broadcasting signaling to reduce power dissipation, namely entering in a sleeping mode.

Embodiment II: the search space set group switching indication field: 1-N bits, N is an integer greater than or equal to 1.

One bit or a plurality of bits may be adopted in the search space set group switching indication field, as exemplified bellow:
when there is only one bit in the search space set group switching indication field, and higher-layer signaling only configures two search space set groups, the one bit instruction represents the search space set group switching indication of the target cell or the target cell group.

For example, a value being "1" represents that switching is performed from the search space set group 0 to the search space set group 1 for PDCCH monitoring, or the search space set group 1 is maintained for PDCCH monitoring; and a value being "0" represents that switching is performed from the search space set group 1 to the search space set group 0 for PDCCH monitoring, or the search space set group 0 is maintained for PDCCH monitoring.

For another example, a value being "1" represents that the search space set group is changed, that is, switching is performed from a current search space set to another search space set for PDCCH monitoring; and a value being "0" represents that the search space set group is not changed, and the current search space set is maintained for PDCCH monitoring.

When there is only one bit in the search space set group switching indication field, and higher-layer signaling only configures a plurality of search space set groups, the bit instruction represents the search space set group switching indication of the target cell or the target cell group.

For example, a value being "1" represents that switching is performed from the search space set group 0 to a target candidate search space set group for PDCCH monitoring, or the target candidate search space set group is maintained for PDCCH monitoring; and a value being "0" represents that switching is performed from the target candidate search space set group to the search space set group 0 for PDCCH monitoring, or the search space set group 0 is maintained for PDCCH monitoring.

For another example, a value being "1" represents that the search space set group is changed, that is, switching is performed from the current search space set to the target candidate search space set group or a defaulted space set group for PDCCH monitoring; and a value being "0" represents that the search space set group is not changed, and the current search space set is maintained for PDCCH monitoring.

The target candidate search space set group may be instructed through the higher-layer signaling, and may also be instructed through the MAC CE. For example, the higher-layer signaling configures M search space set groups, and the MAC CE may specifically instruct the target candidate search space set group through a method of M bits for bit mapping.

When there are only N bits in the search space set group switching indication field, and the higher-layer signaling only configures M search space set groups, the N bit instruction represents the specific search space set group switching indication of the target cell or the target cell group. An indication method may be a specific index of specific search space set groups, or an index value of a search space set group list configured by the higher-layer signaling, which is not limited to the plurality of above examples.

When there are only N bits in the search space set group switching indication field, and the higher-layer signaling only configures the M search space set groups, each bit in the search space set group switching indication field indicates a search space set group switching indication of the target cell or the target cell group, and specifically as the above. Here, N is greater than or equal to M, and N and M are bother integers.

Note: the search space set group switching indication field here refers to a user dedicated switching instruction (namely the user dedicated instruction), not a set of switching indication information related to the switching of all search space set carried in the control signaling, for example, the target cell information or target cell group indication information, and the target search space set group indication information, etc. for performing search space set group switching are not included.

Embodiment III: a design method of downlink control signaling carrying the user dedicated instruction-a DCI format 0_1/1_1 carrying scheduling information.

In order to reduce expenses of the DCI signaling, according to the embodiments, the search space set group switching indication is carried by the DCI format, and other information may be preconfigured through the higher-layer signaling, and/or instructed by the MAC CE.

There are one or more combinations of following methods for carrying the search space set group switching indication in the DCI format 0_1/1_1 that carries the scheduling information.

Method one: 1 bit to N bits information fields are added in the DCI format 0_1/1_1, and configured to instruct the switching of the search space set group. A specific instruction method is detailed in Embodiment II .

Method two: existing information fields are redefined in the existing downlink control signaling for energy-saving search space set group switching. For example, when a CIF filed is not 0, a secondary cell (SCell) dormancy indication field may serve as the search space set group switching indication and/or an SCell (SCell group) dormancy indication; and when the CIF filed is 0, the (SCell) dormancy indication field may be used for the SCell (SCell group) dormancy behavior instruction.

The following is an example of a using method of Method one, but is not limited to examples.

It assumes that a base station configures two search space set groups for a primary cell of the terminal through the higher-layer signaling, index values of the two search space set groups are respectively "0" and "1", and each search space set group includes one or more search space sets. The search space set group 0 is the defaulted search space set group, and the search space set group 1 is a group of search space sets with the relatively sparse PDCCH monitoring period.

The base station sends information related to the switching of the search space set group to the terminal through the DCI format 0_1/1_1 carrying the scheduling information. When the base station schedules a last data package, it may instruct that the primary cell of the terminal is switched to the search space set group 1 for performing relatively sparse PDCCH monitoring by setting the value of the search space set group switching indication field (taking 1 bit as an example) in the DCI format 0_1/1_1 carrying the scheduling information to "1"; and otherwise, when the terminal has data to be transmitted, a base station side sends information related to the data scheduling to the terminal through the DCI format 0_1/1_1 carrying the scheduling information, meanwhile, sets the search space set group switching indication field (taking 1 bit as an example) to "0", and instructs the terminal falls back to the search space set group 0 for conventional PDCCH monitoring.

The following is an example of a using method of Method two, but is not limited to examples.

It assumes that the base station configures the two search space set groups for the primary cell of the terminal through the higher-layer signaling, the index values of the two search space set groups are respectively "0" and "1", and each search space set group includes one or more search space sets. The search space set group 0 is the defaulted search space set group, and the search space set group 1 is a search space set group with the relatively sparse PDCCH monitoring period.

The base station sends the information related to the search space set group switching to the terminal through the DCI format 0_1/1_1 carrying the scheduling information, and meanwhile, the terminal supports cross-carrier scheduling. When the base station schedules the last data package, CIF field is configured to be a non-zero value in the DCI format 0_1/1_1 carrying the scheduling information, and when there is only one bit configured for the SCell dormancy indication field to serve as the search space set group switching indication and the value of the search space set group switching indication is "1", the base station instructs that the primary cell of the terminal is switched to the search space set group 1 for relatively sparse PDCCH monitoring; and otherwise, when the terminal has data to be transmitted, the base station side configures the CIF field to be the non-zero value in the DCI format 0_1/1_1 carrying the scheduling information, and when there is only one bit configured for the SCell dormancy indication filed to serve as the search space set group switching indication and the value of the search space set group switching indication is "0", the base station instructs the terminal to fall back to the search space set group 0 for conventional PDCCH monitoring.

In addition, when the CIF field is configured to be the non-zero value in the DCI format 0_1/1_1 carrying the scheduling information, the SCell dormancy indication field may be configured to be a combination instruction of the search space set group switching indication and the SCell dormancy indication field, for example, an indication field value is an index value or a coded value of a combination instruction list, or 1 bit+(N-1)bit SCell dormancy indication, where N bits are a total length of the SCell dormancy indication field, which is not limited to the plurality of listed kinds.

The design method of the DCI format 0_2/1_2 carrying the scheduling information is consistent with that of the DCI format 0_1/1_1 carrying the scheduling information, which is not repeated.

Embodiment IV: a design method of downlink control signaling carrying a user dedicated instruction-a DCI format 0_1/1_1 carrying non-scheduling information.

In order to reduce expenses of the DCI signaling, according to the embodiments, the search space set group switching indication is only carried by the DCI format, and other information may be preconfigured through the higher-layer signaling, and/or instructed by the MAC CE.

There are one or more combinations of following methods for carrying the search space set group switching indication in the DCI format 0_1/1_1 that carries the non-scheduling information.

Method one: 1bit to N bits information fields are added in the DCI format 0_1/1_1, and configured to instruct search space set group switching. A specific instruction method is detailed in Embodiment II.

Method two: the existing information fields are redefined in the existing downlink control signaling for energy-saving search space set group switching, including one or more combinations of the following information fields: a modulation and coding scheme, a new data indicator, a redundancy version, a hybrid automatic repeat reQuest (HARQ) process number, an antenna port (s), a demodulation reference signal (DMRS) sequence initialization, etc., and the 1 to N bits in the information fields with most 14 bits are used for the search space set group switching indication. Specifically, when the following conditions are met at the same time: a short HARQ-ACK request field is default or a value of "0", a carrier indication field is default or a value of "0" and resource distribution indication fields are all a value of "0"or a value of "1", in the above listed information fields, any 1 to N bits may be separately used for the search space set group switching indication, and in the information fields listed above, information bits may also be used for a combination indication of search space set group switching indication and secondary cell dormancy indication.

The following examples are illustrative, but not limited to the examples given.

Note: the above information fields refer to a modulation and coding scheme, a new data indicator, a redundancy version, a HARQ process number, an antenna port(s), a DMRS sequence initialization and other information fields.

Method one: (separate indication) one piece of indication information is set in the above information field in a non-scheduled DCI, such as 1 bit, when the value of the indication information is "0", the above information field other than the indication information may be used as the indication information filed for switching the search space set group; and when the value of the indication information is "1", the above information field may be used as SCell or SCell group dormancy indication field.

Method two: (combined indication) the above information field in the non-scheduled DCI may be simultaneously used as search space set group switching indication and used as the SCell or SCell group dormancy indication, and a specific position of the information field may be configured through the higher-layer signaling.

When there is no data transmission at the terminal, the base station side may inform the terminal to trigger the switching of the corresponding search space set group at the target cell (group) though the DCI format 0_1/1_1 of the non-scheduling information.

The design method of the DCI format 0_2/1_2 carrying the non-scheduling information is consistent with that of the DCI format 0_1/1_1 carrying the non-scheduling information, which is not repeated.

Embodiment V: a design method of downlink control signaling carrying a user dedicated instructionDCI format 2_6.

In order to reduce expenses of the DCI signaling, according to the embodiments, the search space set group switching indication is only carried by the DCI format, and other information may be preconfigured through the higher-layer signaling, and/or instructed by the MAC CE.

In the DCI format 2_6, there are one or more combinations of following methods for carrying the search space set group switching indication.

Method one: a base station sends the DCI format 2_6 at a DRX inactivity period, and adds 1 to N bits information fields to an information field of each user in the DCI format 2_6, to instruct a search space set group switching condition of an activity period of the next DRX period of a certain user. For example, when the search space set group switching indication in the DCI format 2_6 received by the terminal is "1", the terminal switches to the search space set group 1 for sparse PDCCH monitoring in the next DRX period in the target cell, so as to implement a purpose of energy saving of the terminal. Alternatively, when the search space set group switching indication in the DCI format 2_6 received by the terminal is "1", the terminal switches to the search space set group 1 for dense PDCCH monitoring in the next DRX period in the target cell, so as to improve the transmission delay performance of the terminal.

Method two: the base station sends the DCI format 2_6 at a DRX activity period, and a wakeup indication field of the DCI format 2_6 is redefined to be a search space set group switching indication field.

When the base station sends the DCI format 2_6 at the DRX inactivity period, the information field of each user is a wakeup indication field and an SCell dormancy indication field; and when the base station sends the DCI format 2_6 at the DRX activity period, the information field of each user is the search space set group switching indication field and the SCell dormancy indication field. The using method of the search space set group switching indication field of 1 bit may refer to Embodiment II. The base station instructs the switching of the search space set group of the terminal within the DRX activity period through the DCI format 2_6, so as to implement an effect of energy saving of the terminal.

Embodiment VI: a design method of downlink control signaling carrying a user dedicated instruction-DCI format 2_0.

In order to reduce expenses of the DCI signaling, according to the embodiments, the search space set group switching indication is only carried by the DCI format, and other information may be preconfigured through the higher-layer signaling, and/or instructed by the MAC CE.

When the bit number M of the search space set group switching indication field in the DCI format 2_0 configured by the base station side is greater than the number N of target cells or the target cell groups configured by the terminal, a user dedicated switching instruction may be achieved.

For example: when there is only one target cell (group) where the terminal performs the switching of search space set group and there are two search space set groups, only 2 bits are needed by the search space set group switching indication field in the DCI format 2_0, such as "01", according to information configured by higher-layer signaling, an ID of the target cell (group) and a position of the search space set group switching indication in the DCI format 2_0 are only needed to be configured for K terminals receiving the DCI format 2_0, and different search space set group switching results of different terminals may be achieved. For example, users 1, 2 and 3 instruct a position of "0", and users 4, 5 and 6 instruct a position of "1". When search space sets of the terminals are changed, a new position needs to be indicated by an RRC reconfiguration or by MAC CE.

When there are two target cells (groups) where the terminal performs the switching of the search space set group and there are two search space set groups, only 3 bits are needed by the search space set group switching indication field in the DCI format 2_0, such as "101", positions in the corresponding DCI format are respectively P1, P2 and P3, according to the information configured by higher-layer signaling, IDs of the target cells (groups) and the position of the search space set group switching indication in the DCI format 2_0 are only needed to be configured for K terminals receiving the DCI format 2_0, and different search space set group switching results of different terminals may be achieved. For example, two target cells (groups) of the user 1 are respectively P1 and P2, two target cells (groups) of the user 2 are respectively P2 and P3, two target cells (groups) of the user 3 are respectively P1 and P3, etc.

In addition, a bit mapping mode may also be adopted in the DCI format 2_0, so as to implement different switching conditions of a group of users receiving the DCI format 2_0. If each terminal configures two search space set groups, indexes of the two search space set groups are respectively 0 or 1, meanwhile, there are K users receiving the DCI format 2_0, the search space set group switching indication field in the DCI format 2_0 is K bits, and each bit corresponds to the switching condition of the search space set group of one terminal.

Embodiment VII: combined utilization between a DCI carrying scheduling information and a DCI carrying non-scheduling information.

A user may simultaneously support two or more than two DCIs for search space set switching of a user dedicated instruction, and a specific DCI format is detailed in Embodiment II to Embodiment VI.

For example, the user simultaneously supports both the DCI format 0_1/1_1 carrying scheduling information and the DCI format 0_1/1_1 carrying non-scheduling information to carry the user dedicated instruction. When transmitting the last data package for the user, the base station side may send the DCI format carrying the scheduling information for instructing the user to switch the search space set to a relatively energy-saving search space set, such as subsets (not limited to the listed) with a relatively large monitoring period and aggregation grade configuration. When the user has no data scheduling and at the DRX activity period at the same time, the base station side may instruct the user to switch the search space set to the relatively energy-saving search space set by sending the DCI format 0_1/1_1 carrying the non-scheduling information for further energy-saving of the terminal; or the defaulted search space set is recovered, so as to prepare subsequent data service reception.

For another example: the user simultaneously supports the DCI format 0_1/1_1 carrying the scheduling information and the DCI format 2_6 carrying the non-scheduling information, and the DCI format 0_1/1_1 and the DCI format 2_6 are configured to carry the user dedicated instruction. When the user is transmitting the last data package of data transmission, the base station side may send the DCI format carrying the scheduling information for instructing the user to switch the search space set group to the relatively energy-saving search space set, such as subsets (not limited to the listed) with a relatively large monitoring period and aggregation grade configuration. When the user has no data scheduling and at the DRX inactivity period, the base station side may indicate the user to switch the search space set group to the relatively energy-saving search space set within the subsequent wakeup DRX activity period by sending the DCI format 2_6 carrying the non-scheduling information for further energy-saving of the terminal; or the defaulted search space set is recovered, so as to prepare subsequent data service reception.

Note: the above is only an example of combined utilization of different types of DCIs, and not limited to the above listed condition. The user is the terminal.

In conclusion, referring to Fig. 2, at the terminal side, a method of switching a search space set group of a target cell provided by the embodiments of the present application includes:
S101, receiving a control signaling sent by a network side and carrying a user dedicated instruction, and the user dedicated instruction is configured to instruct a terminal to switch a current search space set group of at least one target cell to a target search space set group; and
S102, switching the current search space set group of the at least one target cell to the target search space set group according to the control signaling.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element, MAC CE, signaling; and
radio resource control, RRC, signaling.

Optionally, the physical layer signaling includes but is not limited to:
downlink control information, DCI, format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

Optionally, the method further includes: reporting terminal capability to the network side, where the terminal capability is configured to instruct the terminal whether to support switching the current search space set group of the at least one target cell to the target search space set group through a user dedicated instruction.

Optionally, the method further includes:
switching the terminal to a defaulted search space set group when a preset fallback condition is met.

Referring to Fig. 3, on the network side, a control method of switching a search space set group of a target cell provided by the embodiments of the present application includes:
S201, configuring the search space set group for a terminal; and
S202, sending a control signaling carrying a user dedicated instruction to the terminal, and the user dedicated instruction is configured to instruct the terminal to switch at least one target cell to a target search space set group.

Optionally, the method further includes: receiving terminal capability reported by the terminal, and the terminal capability is configured to instruct the terminal whether to support switching the current search space set group of at least one target cell to the target search space set group through a user dedicated instruction; and
the configuring the search space set group for the terminal specifically includes: configuring the search space set group for the terminal according to the terminal capability.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element, MAC CE, signaling; and
radio resource control, RRC, signaling.

Optionally, the physical layer signaling includes but is not limited to:
downlink control information, DCI, format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

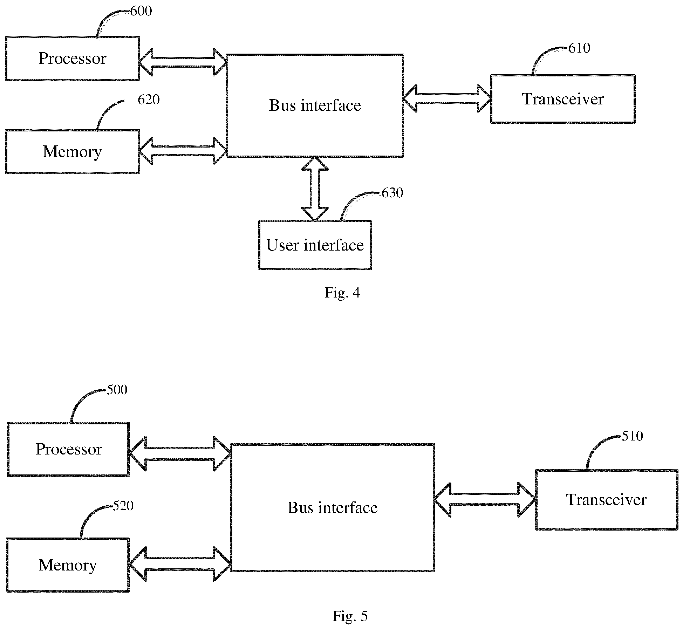

Referring to Fig. 4, on a terminal side, an apparatus of switching a search space set group of a target cell provided by the embodiments of the present application includes:
a memory 620, configured to store a program command; and
a processor 600, configured to call the program command stored in the memory, and execute according to an obtained program:
   receiving control signaling sent by a network side and carrying a user dedicated instruction through a transceiver 610, where the user dedicated instruction is configured to instruct a terminal to switch a current search space set group of at least one target cell to a target search space set group; and
   switching the current search space set group of the at least one target cell to the target search space set group according to the control signaling.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element, MAC CE, signaling; and
radio resource control, RRC, signaling.

Optionally, the physical layer signaling includes but is not limited to:
downlink control information, DCI, format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

Optionally, the processor 600 is further configured to: report terminal capability to the network side through the transceiver 610, and the terminal capability is configured to instruct the terminal whether to support switching the current search space set group of at least one target cell to the target search space set group through the user dedicated instruction.

Optionally, the processor 600 is further configured to:
switch, when meeting a preset fallback condition, the terminal to a defaulted search space set group.

The transceiver 610 is configured to receive and send data under the control of the processor 600.

In Fig. 4, a bus framework may include interconnected buses and bridges of any number, and is specifically connected by one or more processors represented by the processor 600 and various circuits of the memory represented by the memory 620. The bus framework may further connect various other circuits such as a peripheral device, a voltage stabilizer and a power management circuit, these are public known in the field, and thus, it is not further described in the text. A bus interface provides an interface. The transceiver 610 may be a plurality of elements, namely including a transmitter and a receiver, and units in communication with various apparatuses on a transmission medium are provided. Aiming at different user equipment, a user interface 630 may further be an interface capable of being internally and externally connected with needed devices, and the connecting devices include but are not limited to a keypad, a display, a loudspeaker, a microphone, a control lever, etc.

The processor 600 is in charge of the bus framework and usual processing, and the memory 620 may store data used by the processor 600 when executing the operation.

Optionally, the processor 600 may be a central processing unit (CPU), an application specific integrated circuit (ASIC), a field-programmable gate array (FPGA) or a complex programmable logic device (CPLD).

Referring to Fig. 5, on a network side, a control apparatus of switching a search space set group of a target cell provided by the embodiments of the present application includes:
a memory 520, configured to store a program command; and
a processor 500, configured to call the program command stored in the memory, and execute according to the obtained program:
   configuring a search space set group for a terminal; and
   sending a control signaling carrying a user dedicated instruction to the terminal through a transceiver 510, where the user dedicated instruction is configured to instruct the terminal to switch at least one target cell to a target search space set group.

Optionally, the processor 500 is further configured to: receive terminal capability reported by the terminal through the transceiver 510, and the terminal capability is configured to instruct the terminal whether to support switching a current search space set group of the at least one target cell to the target search space set group through the user dedicated instruction; and
the configuring the search space set group for the terminal specifically includes: configuring the search space set group for the terminal according to the terminal capability.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element, MAC CE, signaling; and
radio resource control, RRC, signaling.

Optionally, the physical layer signaling includes but is not limited to:
downlink control information, DCI, format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

The transceiver 510 is configured to receive and send data under the control of the processor 500.

In Fig. 5, a bus framework may include interconnected buses and bridges of any number, and is specifically connected by one or more processors represented by the processor 500 and various circuits of the memory represented by the memory 520. The bus framework may further connect various other circuits such as a peripheral device, a voltage stabilizer and a power management circuit, these are public known in the field, and thus, it is not further described in the text. A bus interface provides an interface. The transceiver 510 may be a plurality of elements, namely including a transmitter and a receiver, and units in communication with various apparatuses on a transmission medium are provided. The processor 500 is in charge of the bus framework and usual processing, and the memory 520 may store data used by the processor 500 when executing the operation.

The processor 500 may be a central processing unit (CPU), an application specific integrated circuit (ASIC), a field-programmable gate array (FPGA) or a complex programmable logic device (CPLD).

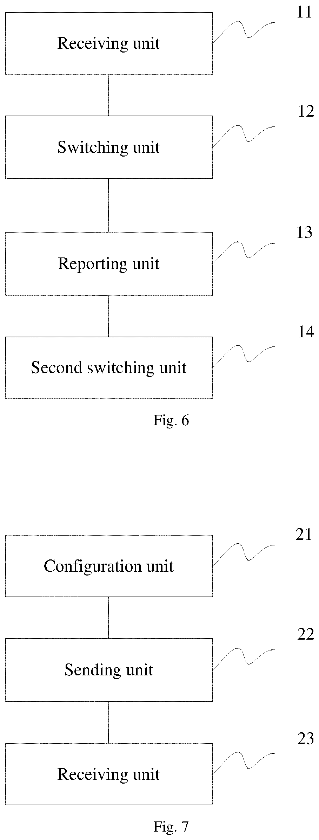

Referring to Fig. 6, on a terminal side, another apparatus of switching a search space set group of a target cell provided by the embodiments of the present application includes:
a receiving unit 11, configured to receive control signaling sent by a network side and carrying a user dedicated instruction, and the user dedicated instruction is configured to instruct a terminal to switch a current search space set group of at least one target cell to a target search space set group; and
a switching unit 12, configured to switch the current search space set group of the at least one target cell to the target search space set group according to the control signaling.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element MAC CE signaling; and
radio resource control RRC signaling.

Optionally, the physical layer signaling includes but is not limited to:
downlink control information DCI format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

Optionally, the apparatus further includes a reporting unit 13, configured to report terminal capability to the network side, and the terminal capability is configured to instruct the terminal whether to support switching a current search space set group of at least one target cell to a target search space set group through the user dedicated instruction.

Optionally, the apparatus further includes a second switching unit 14, configured to make the terminal switch to a defaulted search space set group when a preset fallback condition is met.

Referring to Fig. 7, on a network side, another control apparatus of switching a search space set group of a target cell provided by the embodiments of the present application includes:
a configuration unit 21, configured to configure the search space set group for a terminal; and
a sending unit 22, configured to send a control signaling carrying a user dedicated instruction to the terminal, and the user dedicated instruction is configured to instruct the terminal to switch at least one target cell to a target search space set group.

Optionally, the apparatus further includes a receiving unit 23, configured to receive the terminal capability reported by the terminal, and the terminal capability is configured to instruct the terminal whether to support switching the current search space set group of the at least one target cell to the target search space set group through the user dedicated instruction; and
the configuring the search space set group for the terminal specifically includes: configuring the search space set group for the terminal according to the terminal capability.

Optionally, the control signaling further includes but is not limited to one or more combinations of the following contents:
target cell information or target cell group indication information for switching search space set group;
a search space set group switching indication; and
target search space set group indication information.

Optionally, the control signaling specifically includes but is not limited to one or more combinations of the following format signaling:
physical layer signaling;
media access control element, MAC CE, signaling; and
radio resource control, RRC, signaling.

Optionally, the physical layer signaling includes but is not limited to:
downlink control information, DCI, format signaling carrying scheduling information, and/or DCI format signaling carrying non-scheduling information.

Optionally, the DCI format signaling carrying the scheduling information includes but is not limited to DCI format 0_1/1_1/0_2/1_2 signaling; and
the DCI format signaling carrying the non-scheduling information includes but is not limited to DCI format 0_1/1_1/0_2/1_2/2_6/2_0 signaling.

Optionally, the at least one target cell includes but is not limited to: a serving cell of the terminal, a primary cell, a secondary cell or one or more cells in a secondary cell group.

Optionally, the target search space set group is any one of two or more than two search space set groups configured by higher-layer signaling.

It needs to be illustrated that division of units in the embodiments of the present application is schematic, and is only a kind of logical function division, and other division forms may exist during practical implementation. In addition, in the embodiments of the present application, functional units may be integrated into a processing unit, the units may also exist physically, and two or more than two units may also be integrated into a unit. The above integrated units may be implemented by adopting a form of hardware, and may also be implemented by adopting a form of software functional units.

The integrated units may be stored in a computer readable storage medium if being implemented in the form of software functional units and serving as an independent product for sale and use. Based on this understanding, the technical solution of the present application in essence or the part that contributes to the prior art or the whole or part of the technical solution may be reflected in a form of software products, the computer software products are stored in a storage medium, and a plurality of instructions are included to make a computer device(may be a personal computer, a server, or a network device, etc.) or a processor execute the whole or part steps of the methods of the embodiments of the present application. The before-mentioned storage medium includes a U disc, a mobile hard disk, a read-only memory (ROM), a random access memory (RAM), a diskette or an optical disk and other media capable of storing program codes.

The embodiments of the present application provide a computing device. The computing device specifically may be a desktop computer, a portable computer, a smart phone, a tablet personal computer, a personal digital assistant, etc. The computing device may include a center processing unit (CPU), a memory, an input/output device, etc., the input device may include a keyboard, a mouse, a touch screen, etc., and the output device may include a display device, such as a liquid crystal display (LCD) and a cathode ray tube (CRT).

The memory may include a read-only memory (ROM) and a random access memory (RAM), and provides program commands and data stored in the memory for the processor. In the embodiment of the present application, the memory may be configured to store procedures of any method provided by the embodiments of the present application.

The processor calls the program instructions stored in the memory, and the processor is configured to execute any method provided by the embodiments of the present disclosure according to the obtained program commands.

The embodiments of the present application provide a computer storage medium, configured to store the computer program instructions used in the apparatus provided by the embodiment of the present application, and the computer program commands include procedures used for executing any method provided by the embodiment of the present application.

The computer storage medium may be any available medium or data storage device capable of being stored by a computer, includes but is not limited to a magnetic memory (such as a soft disk, a hard disk, a magnetic tape and a magnetic optical disk), an optical memory (such as a CD, a DVD, a BD and an HVD), and a semiconductor memory (such as a ROM, an EPROM, an EEPROM, a non-volatile memory (NAND FLASH) and a solid state disk (SSD)).

The method provided by the embodiments of the present application may be applied to a terminal device, and may also be applied to a network device.

The terminal device may also be called user equipment (UE for short), a mobile station (MS for short), a mobile terminal, etc. Optionally, the terminal may have capacity of being in communication with one or more core networks through a radio access network (RAN), for example, the terminal may be a mobile phone (or called a "honeycomb" phone), or a computer with a mobile property, for example, the terminal may further be a portable, pocket, handheld, computer built-in or vehicle-mounted mobile apparatus.

The network device may be a base station (such as an access point), and refers to a device being in communication with a wireless terminal through one or more sectors in an air interface in an access network. The base station may be configured to perform interconversion on a received air frame and an IP grouping, to serve as a router between the wireless terminal and the rest part of the access network, and the rest part of the access network may include an internet protocol (IP) network. The base station may further coordinate the property management of the air interface. For example, the base station may be a base transceiver station (BTS) in a GSM or a CDMA, may also be a NodeB in a WCDMA, may further be an evolution Node B (an NodeB or an eNB or an e-NodeB) in an LTE, or may also be a gNB in a 5G system, etc., which is not limited in the embodiment of the present application.

The above method processing flow may be implemented by a software program, the software program may be stored in a storage medium, and the above method step is executed when the stored software program is called.

In conclusion, in the technical solution provided by the embodiments of the present application, the downlink signaling carrying the user dedicated instruction may indicate the terminal to perform more flexible search space set group switching, and perform search space set group switching aiming at service features of different users, thereby achieving an effect of energy saving of the terminal. According to different configuration methods of the search space set groups, the energy-saving performance of the terminal may further be improved.

Those skilled in the art should understand that the embodiments of the present application may be provided as the method, the system, or the computer program product. Therefore, the present application may adopt forms of a complete hardware embodiment, a complete software embodiment, or an embodiment combining with software and hardware aspects. In addition, the present application may adopt forms of the computer program product implemented on one or more computer available storage media (including but not limited to a disk memory and an optical memory, etc.) including a computer available program code.

The present application is described by reference to flow diagrams and/or block diagrams of the method, the device(system), and the computer program product of the embodiments of the present application. It should be understood that each flow and/or each block in the flow diagrams and/or block diagrams and a combination of flows and/or blocks in the flow diagrams and/or block diagrams may be implemented by the computer program instructions. These computer program instructions may be provided to a general-purpose computer, a dedicated computer, an embedded processor or processors of other programmable data processing devices to generate a machine, so that instructions executed through the computer or the processors of the other programmable data processing devices generate an apparatus for implementing specified functions in one flow or the plurality of flows in the flow diagrams and/or one block or the plurality of blocks in the block diagrams.

These computer program instructions may be stored in a computer readable memory capable of guiding the computer or other programmable data processing devices to work in a specific form, so the instructions stored in the computer readable memory generate manufactures including an instruction apparatus, and the instruction apparatus implements the specific function in one flow or the plurality of flows in the flow diagrams and/or one block or the plurality of blocks in the block diagrams.

These computer program instructions may also be loaded on the computer or other programmable data processing devices, so a series of operation steps are executed on the computer or other programmable data processing device to generate processing implemented by the computer, and the instructions executed on the computer or other programmable data processing devices provide steps for implementing specified functions in one flow or the plurality of flows in the flow diagrams and/or one block or the plurality of blocks in the block diagrams.

Apparently, those skilled in the art may perform various changes and modifications on the present application without departing from the spirit and scope of the present application. Therefore, if these changes and modifications of the present application fall in the scope of the claims of the present application and their equivalent technologies, the present application is intended to include these changes and modifications.

## Claims

1. A method of switching a search space set group of a target cell, comprising:
receiving control signaling sent by a network side and carrying a user dedicated instruction, wherein the user dedicated instruction is configured to instruct a terminal to switch a current search space set group of at least one target cell to a target search space set group; and
switching the current search space set group of the at least one target cell to the target search space set group according to the control signaling.

2. The method according to claim 1, wherein the control signaling further comprises one or more combinations of the following contents:
target cell information or target cell group indication information for switching of the search space set group;
a search space set group switching indication; and
target search space set group indication information.

3. The method according to claim 1, wherein the control signaling specifically comprises one or more combinations of the following format signaling:
physical layer signaling;
media access control element, MAC CE, signaling; and
radio resource control, RRC, signaling.

4. The method according to claim 3, wherein the physical layer signaling comprises:
downlink control information, DCI, format signaling carrying scheduling information, and/or DCI format signaling carrying non-scheduling information.

5. The method according to claim 4, wherein the DCI format signaling carrying the scheduling information comprises DCI format 0_1/1_1/0_2/1_2 signaling; and
the DCI format signaling carrying the non-scheduling information comprises DCI format 0_1/1_1/0_2/1_2/2_6/2_0 signaling.

6. The method according to claim 1, wherein the at least one target cell comprises a serving cell of the terminal, a primary cell, a secondary cell or one or more cells in a secondary cell group.

7. The method according to claim 1, wherein the target search space set group is any one of two or more than two search space set groups configured by higher-layer signaling.

8. The method according to claim 1, further comprising:
reporting terminal capability to the network side, wherein the terminal capability is configured to instruct the terminal whether to support switching the current search space set group of the at least one target cell to the target search space set group through the user dedicated instruction.

9. The method according to claim 1, further comprising:
switching, by the terminal, to a defaulted search space set group when meeting a preset fallback condition.

10. A control method of switching a search space set group of a target cell, comprising:
configuring the search space set group for a terminal; and
sending control signaling carrying a user dedicated instruction to the terminal, wherein the user dedicated instruction is configured to instruct the terminal to switch at least one target cell to a target search space set group.

11. The method according to claim 10, further comprising:
receiving terminal capability reported by the terminal, wherein the terminal capability is configured to instruct the terminal whether to support switching a current search space set group of the at least one target cell to the target search space set group through the user dedicated instruction; and
the configuring the search space set group for a terminal specifically comprising: configuring, according to the terminal capability, the search space set group for the terminal.

12. The method according to claim 10, wherein the control signaling further comprises one or more combinations of the following contents:
target cell information or target cell group indication information for switching search space set group;
a search space set group switching indication; and
target search space set group indication information.

13. The method according to claim 10, wherein the control signaling specifically comprises one or more combinations of the following format signaling:
physical layer signaling;
media access control element, MAC CE, signaling; and
radio resource control, RRC, signaling.

14. The method according to claim 13, wherein the physical layer signaling comprises:
downlink control information, DCI, format signaling carrying scheduling information, and/or DCI format signaling carrying non-scheduling information.

15. The method according to claim 14, wherein the DCI format signaling carrying the scheduling information comprises DCI format 0_1/1_1/0_2/1_2 signaling; and
the DCI format signaling carrying the non-scheduling information comprises DCI format 0_1/1_1/0_2/1_2/2_6/2_0 signaling.

16. The method according to claim 10, wherein the at least one target cell comprises a serving cell of the terminal, a primary cell, a secondary cell or one or more cells in a secondary cell group.

17. The method according to claim 10, wherein the target search space set group is any one of two or more than two search space set groups configured by higher-layer signaling.

18. An apparatus of switching a search space set group of a target cell, comprising:
a memory, configured to store a program command; and
a processor, configured to call the program command stored in the memory, and execute according to an obtained program:
receiving control signaling sent by a network side and carrying a user dedicated instruction, wherein the user dedicated instruction is configured to instruct a terminal to switch a current search space set group of at least one target cell to a target search space set group; and
switching the at least one target cell of the current search space set group to the target search space set group according to the control signaling.

19. The apparatus according to claim 18, wherein the control signaling further comprise one or more combinations of the following contents:
target cell information or target cell group indication information for switching search space set group;
a search space set group switching indication; and
target search space set group indication information.

20. The apparatus according to claim 18, wherein the control signaling specifically comprises one or more combinations of the following format signaling:
physical layer signaling;
media access control element, MAC CE, signaling; and
radio resource control, RRC, signaling.

21. The apparatus according to claim 20, wherein the physical layer signaling comprises:
downlink control information, DCI, format signaling carrying scheduling information, and/or DCI format signaling carrying non-scheduling information.

22. The apparatus according to claim 21, wherein the DCI format signaling carrying the scheduling information comprises DCI format 0_1/1_1/0_2/1_2 signaling; and
the DCI format signaling carrying the non-scheduling information comprises DCI format 0_1/1_1/0_2/1_2/2_6/2_0 signaling.

23. The apparatus according to claim 18, wherein the at least one target cell comprises a serving cell of the terminal, a primary cell, a secondary cell or one or more cells in a secondary cell group.

24. The apparatus according to claim 18, wherein the target search space set group is any one of two or more than two search space set groups configured by higher-layer signaling.

25. The apparatus according to claim 18, wherein the processor is further configured to report terminal capability to the network side, and the terminal capability is configured to instruct the terminal whether to support switching the current search space set group of the at least one target cell to the target search space set group through the user dedicated instruction.

26. The apparatus according to claim 18, wherein the processor is further configured to:
switch the terminal to a defaulted search space set group when meeting a preset fallback condition.

27. A switching control apparatus of a search space set group of a target cell, comprising:
a memory, configured to store a program command; and
a processor, configured to call the program command stored in the memory, and execute according to an obtained program:
configuring the search space set group for a terminal; and
sending control signaling carrying a user dedicated instruction to the terminal, wherein the user dedicated instruction is configured to instruct the terminal to switch at least one target cell to a target search space set group.

28. The apparatus according to claim 27, wherein the processor is further configured to receive a terminal capability report by the terminal, and the terminal capability is configured to instruct the terminal whether to support switching a current search space set group of at least one target cell to the target search space set group through the user dedicated instruction; and
the configuring the search space set group for the terminal specifically comprises configuring, according to the terminal capability, the search space set group for the terminal.

29. The apparatus according to claim 27, wherein the control signaling further comprises one or more combinations of the following contents:
target cell information or target cell group indication information for switching search space set group;
a search space set group switching indication; and
target search space set group indication information.

30. The apparatus according to claim 27, wherein the control signaling specifically comprises one or more combinations of the following format signaling:
physical layer signaling;
media access control element, MAC CE, signaling; and
radio resource control, RRC, signaling.

31. The apparatus according to claim 30, wherein the physical layer signaling comprises
downlink control information, DCI, format signaling carrying scheduling information, and/or DCI format signaling carrying non-scheduling information.

32. The apparatus according to claim 31, wherein the DCI format signaling carrying the scheduling information comprises DCI format 0_1/1_1/0_2/1_2 signaling; and
the DCI format signaling carrying the non-scheduling information comprises DCI format 0_1/1_1/0_2/1_2/2_6/2_0 signaling.

33. The apparatus according to claim 27, wherein the at least one target cell comprises a serving cell of the terminal, a primary cell, a secondary cell or one or more cells in a secondary cell group.

34. The apparatus according to claim 27, wherein the target search space set group is any one of two or more than two search space set groups configured by higher-layer signaling.

35. An apparatus of switching a search space set group of a target cell, comprising:
a receiving unit, configured to receive control signaling sent by a network side and carrying a user dedicated instruction, the user dedicated instruction being configured to instruct a terminal to switch a current search space set group of at least one target cell to a target search space set group; and
a switching unit, configured to switch the current search space set group of the at least one target cell to the target search space set group according to the control signaling.

36. A switching control apparatus of a search space set group of a target cell, comprising:
a configuration unit, configured to configure the search space set group for a terminal; and
a sending unit, configured to send control signaling carrying a user dedicated instruction to the terminal, wherein the user dedicated instruction is configured to instruct the terminal to switch at least one target cell to a target search space set group.

37. A computer storage medium, wherein the computer storage medium stores a computer executable command, and the computer executable command is configured to make a computer execute the method of any one of claims 1-9.

38. A computer storage medium, wherein the computer storage medium stores a computer executable command, and the computer executable instruction is configured to make a computer execute the method of any one of claims 10-17.
